# EUROPEAN PATENT APPLICATION

(11) **EP 0 705 728 A2**
(43) Date of publication of application: **10.04.1996**
(21) Application number: 95304688.5
(22) Date of filing: 04.07.1995
(51) Int. Cl.: B60N 2/30

(54) **Vehicle seat with a vertically adjustable child seat**

(30) Priority: 07.10.1994 US 319639
(71) Applicant: HOOVER UNIVERSAL INC., Plymouth, Michigan 48170 (US)
(72) Inventor: Wdziekonski, Wojciech, Detroit, Michigan 48228 (US); Bart, Kurt A., Brighton, Michigan 48116 (US); Weber, James L., West Bloomfield, Michigan 48322 (US); Osenkowski, Joseph M., Detroit, Michigan 48228 (US)
(74) Representative: Price, Nigel John King

(57) **Abstract**

A vehicle seat having an integral child seat with a vertically movable child seat cushion is disclosed. By vertically moving the child seat cushion, the head and shoulders of the child seat occupant can remain at a fixed position as the child grows in size. This is advantageous in that the child's head is at a higher position enabling the child to sight see even while the child is small in size and also enables the vehicle driver to more easily monitor the child. The vertically movable child seat cushion can either be a part of a panel that is rotatably mounted to the seat back or it can be a rear portion of an adult seat cushion that is vertically movable to form a raised child seat cushion or child booster seat for an older child.

## Description

The present invention relates to vehicle seats with integral child seats and in particular to an integral child seat having a vertically adjustable child seat cushion.

Numerous vehicle seats have been designed in recent years which include an integral child seat. The integral child seat includes certain elements in the vehicle seat which enable the seat to be utilized by a small child. Typical features of an integral child seat are a child seat cushion which is generally positioned higher than the adult seat cushion and a separate restraint system for a child seat occupant. A disadvantage is that the child seat cushions typically have a fixed vertical position. As the child grows, the height of the restraint system shoulder belts must be increased. This has resulted in numerous integral child seats with means to adjust the shoulder belt height. With some of these height adjustment mechanisms, it is possible to twist the belts during adjustment which can impair proper functioning of the belts. Furthermore, with the fixed height child seat cushion, a relatively small child is not able to sight see during travel which results in restlessness and impatience. It can also be difficult for the vehicle driver to observe a small child seated on the child seat cushion.

The object of the present invention is to provide an integral child seat which overcomes the disadvantages associated with a child seat cushion that is fixed in position vertically.

The present invention provides a child seat cushion which is vertically movable to adjust its height and also includes a drive mechanism for vertically moving the child seat cushion. As the child passenger grows, the seat cushion is gradually lowered to maintain the child passenger's head and shoulders at approximately a constant height in the vehicle. The position of the child passenger's head is high enough to enable the child to sight see even at a young age and also makes observation of the child by the adult driver easier. By maintaining the child's shoulders at a fixed position, it is no longer necessary to provide a shoulder belt height adjustment mechanism.

The vertically movable child seat cushion also produces another advantage when used with an energy absorbing child seat. The energy absorbing child seats include deformable means to absorb energy while allowing controlled forward movement of the seat occupant. With a fixed position child seat cushion, as a child grows, the center of gravity of the child also rises, requiring greater energy absorption. However, with the present invention, as the child grow, the child seat cushion is lowered, thus lowering the child's center of gravity. As a result, the energy which must be absorbed is within a narrower range of values than with a fixed position child seat cushion.

In one embodiment, the child seat cushion is part of a flip down panel in the adult seat back. When the panel is flipped down to a generally horizontal position above the adult seat cushion, the child seat cushion can be moved vertically to the desired position.

In a second embodiment, the child seat cushion is formed by a rear portion of the adult seat cushion. This rear portion of the adult seat cushion is vertically movable to be raised above the remainder of the adult seat cushion, forming the child seat cushion. This embodiment can be used as a booster seat for larger children that have outgrown the child seat restraint system and can now use the adult restraint system when seated on the raised booster.

Various drive mechanisms can be employed to vertically raise the child seat cushion. A preferred mechanism includes a pair of guide rods coupled to slidable gear racks. Fixed position pinions are coupled to the gear racks and are rotated by an electric motor causing the racks and the guide rods to move vertically, thus moving the child seat cushion vertically. In a preferred embodiment, the belts of the child restraint system are attached to the vertically movable child seat cushion so as to move therewith.

Further features and advantages of the invention will become apparent from a consideration of the following description and the appended claims when taken in connection with the accompanying drawings.
Figure 1 is a perspective view of a vehicle seat containing the integral child seat of the present invention having a vertically movable child seat cushion;
Figure 2 is a side elevational view of the child seat cushion shown in two positions;
Figure 3 is a rear perspective view of the child seat showing the rack and pinion drive mechanism for moving the child seat cushion;

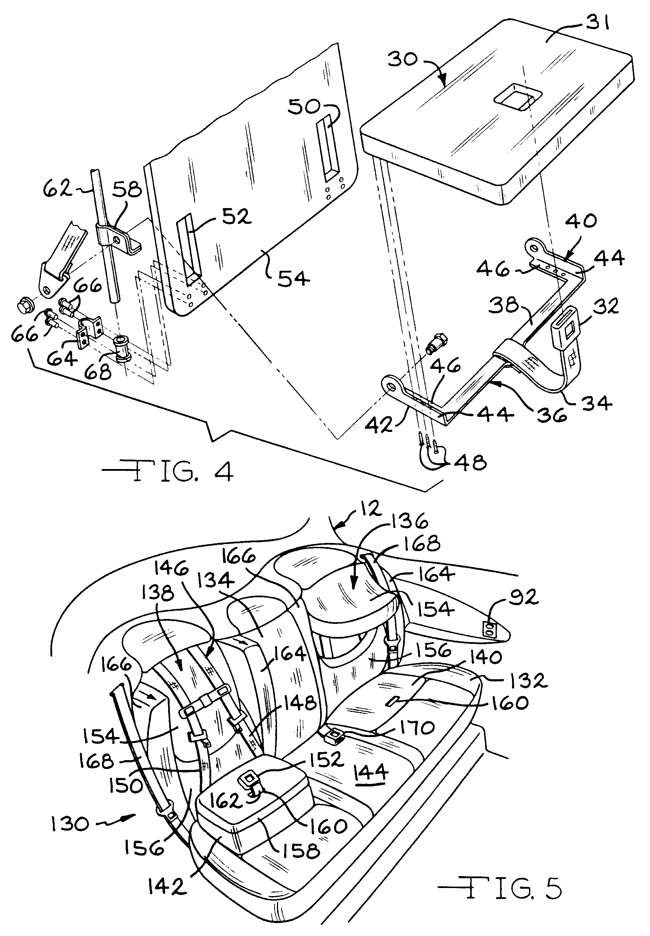

Figure 4 is an exploded fragmentary view of the child seat cushion and its attachment; and
Figure 5 is an alternative embodiment of the present invention in which the child seat cushion is formed by a vertically movable portion of the adult seat cushion.

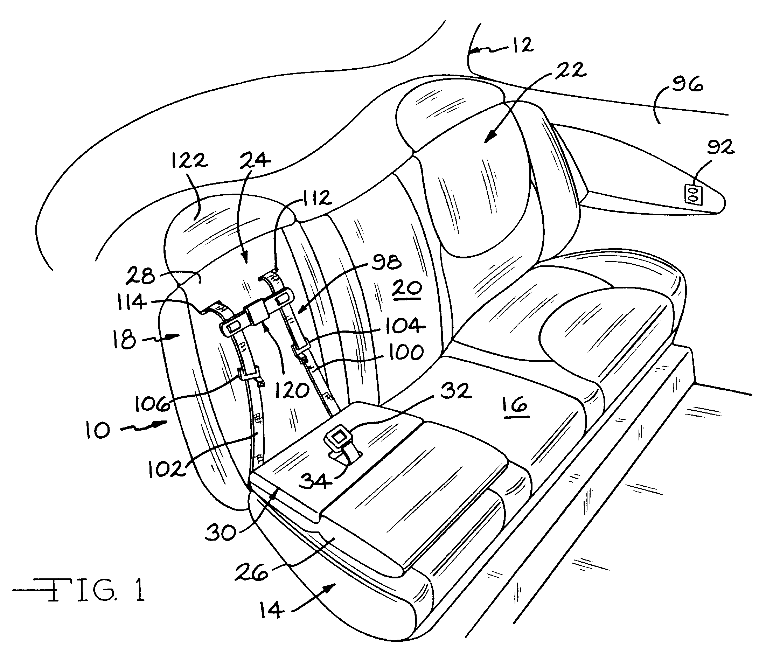

The vehicle seat of the present invention having an integral child seat with a vertically movable child seat cushion is shown in Figure 1 and designated generally at 10. The seat 10 is a rear bench seat installed in a motor vehicle body 12. The seat 10 includes an adult seat cushion 14 having an upper, generally horizontal adult seating surface 16. At the rear of the adult seat cushion 14 is an adult seat back 18 which is generally upright having a front facing adult seat back seating surface 20. The adult seat cushion seating surface 16 and the seat back seating surface 20 are engaged by an adult seat occupant when seated upon the seat 10.

For the purposes of illustration, the seat 10 includes a pair of integral child seats 22, 24. The child seat 22 is in a stowed position, enabling use of the seat 10 by an adult at that location. The child seat 24 is in a use position enabling use of the child seat 24 by a child. The child seat 24 includes a panel 26 which is rotatably mounted to the adult seat back 18 adjacent the lower end of both the panel 26 and the seat back 18. When the panel 26 is rotated forward, a recess 28 is revealed in the adult seat back 18. The back surface of the recess 28 is formed by an upholstered pad supported on a seat back frame 54, described below. When the panel 26 is rotated forward, it is positioned generally horizontal and above the adult seat cushion seating surface 16. In its horizontal position, the upper surface of the panel 26 is shown. The rear portion of the panel 26 is formed by a child seat cushion 30.

The child seat cushion 30 includes a frame 36 having a cross member 38 and a pair of rear facing legs 40, 42 at each side of the child seat cushion 30. The legs 40, 42 of the frame are generally formed as angle irons in cross section each having an upright portion 44 and a horizontal portion 46. The horizontal portions 46 of the legs 40, 42 are generally co-planar with the flat cross member 38 and support the body 31 of the child seat cushion 30 thereon. A plurality of screws or similar fasteners 48 are used to attach the child seat cushion body 31 to the frame 36.

The rear legs 40, 42 of the child seat cushion frame extend rearward through vertically elongated openings 50, 52 in the adult seat back frame 54 and are attached to mounting brackets 56, 58. The mounting brackets 56, 58, are in turn, mounted to slide rods 60, 62. The slide rods 60, 62 are, in turn, carried by the seat back frame 54 for vertical movement relative to the seat back frame. The seat back frame 54, on each side, has a pair of vertically spaced brackets 64 attached thereto by screws, bolts or rivets 66. The brackets 64 each carry a cylindrical bushing 68, having a through bore receiving the slide rods 60, 62. At their upper ends 70, the slide rods 60, 62 are attached to vertical gear racks 72, 74. The gear racks have horizontal gear teeth 76. The gear racks 72, 74 are slidably carried within guide channels 78, 80 which are fixed to the seat back frame 54. Pinion housings 82, 84 are attached to the guide channels near their upper ends. The pinion housings each include a pinion gear that is in mesh with the teeth 76 of the gear racks. The pinion gears are coupled to rotating drive cables 86, 88 which are, in turn, coupled to an electric motor 90. The electric motor 90 is selectively operated by a control switch 92 which is remotely located on the door 96 of the vehicle body 12. Operation of the motor 90 causes the pinion gears to rotate, moving the racks 72, 74, the slide rods 60, 62, and the child seat cushion 30 vertically.

The motor 90 is used to vertically move the seat cushion 30 upward from the panel 26 to a raised position as shown in Figure 2. As a child grows, the child seat cushion 30 is gradually lowered, enabling the child's head and shoulders to remain at the same vertical position. Other drive mechanisms can be used besides the rack and pinion drive such as a hydraulic or pneumatic lift, a nut and screw drive, a manual crank, rachet drive, levers, etc.

The integral child seat includes a child restraint system 98. The restraint system has a seat belt buckle 32 attached to the cross member 38 of the frame 36 by a flexible strap 34. The child restraint system further includes a pair of belts 100, 102, each slidably carrying clasps 104, 106. The lower ends of the belts 100, 102 are attached through seat belt anchors 108, 110 to the mounting brackets 56, 58, respectively, at the rear corners of the child seat cushion 30. From their lower ends, the belts 100, 102 extend upwardly and, near the upper end of the adult seat back, pass through slots 112, 114 in the seat back frame 54. After passing through the slots 112, 114, the belts are attached to seat belt retractors 116, 118 mounted to the seat back frame 54.

The restraint system 98 operates by inserting the clasps 104, 106 into the buckle 32, forming a five point restraint for a child passenger. A section of the belt 102 crosses over the passenger's right leg forming one half of a lap belt, and from the buckle 32 extends over the passenger's right shoulder into the seat back forming a right shoulder belt. Likewise, the belt 100 forms a lap belt extending over the passenger's left leg and a shoulder belt extending from the buckle 32 over the passengers left shoulder and passing into the seat back. Once the clasps 104, 106 are inserted into the buckle, the retractors 116, 118 will adjust the length of the belts 100, 102. A snap connector 120 is carried on the belts 100, 102 and snaps together across the chest of the child passenger to prevent the shoulder straps from sliding off the child's shoulders.

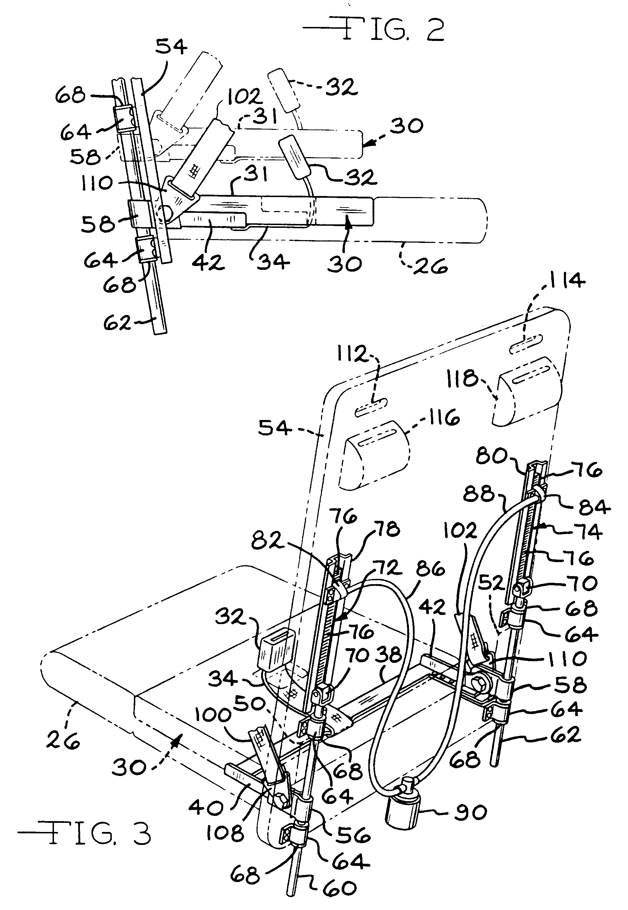

An alternative embodiment of the integral seat of the present invention is shown in Figure 5. The seat 130 includes an adult seat cushion 132 and an adult seat back 134 similar to the seat cushion 14 and seat back 18 in the seat 10. The seat 130 also has a pair of integrated child seats 136, 138. The child seats 136, 138 are formed by child seat cushions 140, 142 which form the rear portion of the adult seat cushion at the locations of each of the two child seats. The child seat cushions are vertically movable from positions flush with the remainder of the adult seating surface 144 of the adult seat cushion 132 to a raised use position as shown by the child seat cushion 142. Drive mechanisms such as that shown in Figure 3 are used to raise and lower the child seat cushions 140, 142.

The child seats 136, 138 each include a child restraint system 146 which is comprised of belts 148, 150 and a buckle 152. Each restraint system 146 is normally concealed behind removable cushions 154, 156 forming the adult seat back seating surface of the seat back 134. To utilize one of the child restraint systems 146, the cushions 154, 156 are first removed to reveal the belts 148, 150 as shown by the child seat 136. The cushions are then replaced behind the belts as shown with the child seat 138. The cushions 154, 156 are held in place with hook and loop fasteners such as Velcro® to enable easy removal and replacement.

The child seat cushions 140, 142 each have a removable upper pad 158. The pads 158 are removed to reveal the buckles 152, enabling the buckles to be passed through slots 160 and to be placed above the child seat cushions 140, 142. The slots 160 are preferably formed with elastic to enable the slots to be expanded sufficiently to pass the buckles therethrough then close tightly around the straps 162. The removable pads 158 can be attached permanently at their rear ends to the child seat cushions 140, 142 and held down in the front with a hook and loop fastener.

One advantage of the integral child seats 136, 138 is that both child passengers as well as adult passengers use the same seating surfaces. There is no decrease in foam thickness or difference in seating comfort between children and adults.

The seat back 134 is also formed with movable bolsters 164, 166 on each side of the child seats 136, 138. The bolsters are movable from positions recessed in the seat back 134 as shown with the child seat 136 forming a portion of the adult seat back seating surface. The upper ends of the bolsters are moved forward from the seat back, rotating about a transverse axis at the lower end of the bolsters so as to project from the adult seat back seating surface and provide side support to a child seated on the child seat cushion.

With the child seats 136, 138, when the child outgrows the child restraint system 146, the raised child seat cushions 140, 142 can be used as a booster seat for the child. When used as a booster seat, the child can use the adult restraint system comprising belts 168 and buckles 170, only one of which is shown, which are provided in a conventional manner for use by an adult passenger.

With the vertically movable child seat cushion 30, the child passenger's head and shoulders are always positioned at the proper location relative to the slots 112, 114 in the seat back as well as a seat back head rest 122. This avoids the need for an adjustment of the shoulder strap height and allows for easy monitoring of the child by the vehicle driver. Furthermore, by fixing the height of the child seat occupant, the child can now use the adult headrest.

It is to be understood that the invention is not limited to the exact construction illustrated and described above, but that various changes and modifications may be made without departing from the scope of the invention as defined in the following claims.

## Claims

1. A vehicle seat comprising:
an adult seat cushion and an adult seat back, said adult seat cushion and adult seat back forming adult seat cushion and adult seat back seating surfaces, respectively, for engagement by an adult seat occupant;
means forming a child seat cushion having a child seating surface for engagement by a child seat occupant, said child seat cushion having plural use positions within a vertical range of use positions for use of said child seat cushion in which said child seating surface is vertically higher than said adult seat cushion seating surface;
a child restraint system for restraining the child seat occupant positioned on said child seat cushion; and
drive means for moving said child seat cushion within said vertical range of use positions.

2. The vehicle seat of claim 1 wherein said child seat cushion is infinitely adjustable within said vertical range of use positions.

3. The vehicle seat of claim 1 wherein said drive means includes a movable rack and a rotating pinion meshing with said rack for moving said child seat cushion vertically.

4. The vehicle seat of claim 1 wherein said drive means includes power means for providing the force necessary to move said child seat cushion vertically within said range of use positions.

5. The vehicle seat of claim 1 wherein said restraint system includes at least one belt having an end attached to said child seat cushion whereby said belt end is movable with said child seat cushion as said child seat cushion is moved vertically within said range of use positions.

6. The vehicle seat of claim 5 wherein said restraint system includes a seat belt buckle attached to said child seat cushion at a location between the child seat occupant's legs when seated upon said child seat cushion and a pair of belts each having one end attached to said child seat cushion on opposite sides of said child seat cushion.

7. The vehicle seat of claim 6 wherein said pair of belts extend upwardly from said child seat cushion and pass into said adult seat back over the shoulders of the child seat occupant and are attached to said adult seat back.

8. The vehicle seat of claim 1 wherein said child seat cushion has a stowed position within said adult seat back and is movable from said stowed position to a use position within said range of use positions.

9. The vehicle seat of claim 8 wherein said child seat cushion is a part of a rotating panel attached to said adult seat back and movable from a stowed position within said adult seat back to a generally horizontal position above said adult seat cushion, said panel forming said adult seat back seating surface when in said stowed position and, said panel, when in said stowed position concealing said child restraint system.

10. The vehicle seat of claim 1 wherein said drive means includes an electric motor for moving said child seat cushion within said vertical range of use positions.
